# EUROPÄISCHE PATENTSCHRIFT

(11) **EP 2 812 208 B1**
(45) Veröffentlichungstag und Bekanntmachung des Hinweises auf die Patenterteilung: **06.01.2016**
(21) Anmeldenummer: 13718535.1
(22) Anmeldetag: 15.04.2013
(51) Int. Cl.: B60L 15/32, B60L 3/00, B61D 3/10, B60L 3/04, B61C 9/38, B60L 9/24, B61C 3/00

(54) **ELEKTRISCHES SCHIENENFAHRZEUG UND VERFAHREN ZU SEINEM BETREIBEN**
ELECTRIC RAIL VEHICLE AND METHOD FOR OPERATING SAME
RAME FERROVIAIRE ÉLECTRIQUE ET PROCÉDÉ PERMETTANT DE FAIRE FONCTIONNER LADITE RAME

(30) Priorität: 25.04.2012 DE 102012206864
(43) Veröffentlichungstag der Anmeldung: 17.12.2014
(73) Patentinhaber: Siemens Aktiengesellschaft, 80333 München (DE)
(72) Erfinder: DETTERBECK, Manfred, 90530 Wendelstein (DE); MONATH, Claus, 91362 Pretzfeld (DE)
(86) Internationale Anmeldenummer: PCT/EP2013/057787
(87) Internationale Veröffentlichungsnummer: WO 2013/160135

(56) Entgegenhaltungen:
- EP-A1- 1 808 326
- EP-A1- 1 955 917
- EP-A1- 2 189 320
- EP-A1- 2 340 958

## Beschreibung

Gemäß den Sicherheitsvorschriften für den Schienenfahrzeugverkehr müssen elektrische Schienenfahrzeuge derart ausgestaltet sein, dass sie bei einem einfachen Fehler in der Stromversorgung mindestens 50 % ihrer Nennleistung aufweisen. So soll sichergestellt sein, dass das elektrische Schienenfahrzeug trotz eines Fehlers immer noch mindestens den nächsten Bahnhof erreicht.

Diesen Sicherheitsvorschriften entspricht das elektrische Hochgeschwindigkeits-Schienenfahrzeug ICE1, das mit einer ersten und einer zweiten Fahrzeug-Antriebs-Einheit versehen ist. An ihrem einander zugewendeten Enden der beiden Fahrzeug-Antriebseinheiten weist das bekannte Schienenfahrzeug einen ersten und einen zweiten Stromabnehmer-Wagen auf, dessen Stromabnehmer an eine gemeinsame Stromversorgungsleitung des Schienenfahrzeugs angeschlossen sind. Um im Störungsfall ein zuverlässiges Abschalten der betroffenen Fahrzeug-Antriebseinheit zu gewährleisten, ist bei den beiden Fahrzeug-Antriebseinheiten jeweils ein Hauptschalter mit einem Anschluss an den Stromabnehmer des Stromabnehmerwagens und mit seinem anderen Anschluss an die gemeinsame Stromversorgungsleitung des Schienenfahrzeugs angeschlossen. Zwischen den beiden anderen Anschlüssen der Hauptschalter ist in der gemeinsamen Stromversorgungsleitung jeweils ein Trennschalter vorgesehen.

Tritt bei dem bekannten elektrischen Schienenfahrzeug in einer Fahrzeug-Antriebseinheit eine Störung im elektrischen System auf, dann wird der jeweilige Hauptschalter geöffnet und anschließend der im Zuge der gemeinsamen Stromversorgungsleitung liegende Trennschalter ebenfalls geöffnet. Damit ist die von einer elektrischen Störung betroffene Fahrzeug-Antriebseinheit total abgeschaltet, und die intakte Fahrzeug-Antriebseinheit kann mit 50 % der Nennleistung des gesamten Schienenfahrzeugs dieses im Notbetrieb weiter bewegen. Dies ist durch einen insgesamt symmetrischen Aufbau des bekannten elektrischen Schienenfahrzeugs erreicht.

Die EP 1 955 917 A1 offenbart einen elektrisch angetriebenen Triebzug mit Antriebseinheiten in beiden Endwagen und einem Mittelwagen sowie zwei Stromabnehmern, die auf den Endwagen angeordnet sind. Die Stromabnehmer sind an eine sich entlang des Triebzugs erstreckende Stromversorgungsleitung angeschlossen, über welche die von der Oberleitung abgegriffene Hochspannung zum angetriebenen Mittelwagen geführt wird. Die EP2 189 320 offenbart ein elektrisches Schienenfahrzeug mit Pearen von in Reihe geschalteten Schutzschaltern; jeder Stromabnehmer ist mit einem Schutzschalter davon verbunden.

Der Erfindung liegt die Aufgabe zugrunde, ein elektrisches Schienenfahrzeug vorzuschlagen, dass unabhängig von seinem Aufbau bzw. der Zusammenstellung seiner Wagen die oben beschriebenen Sicherheitsanforderungen verfüllt.

Zur Lösung dieser Aufgabe geht die Erfindung von einem elektrischen Schienenfahrzeug mit einer ersten und einer zweiten Fahrzeug-Antriebseinheit aus, die an ihren einander zugewandten Enden einen ersten und einen zweiten Stromabnehmer-Wagen aufweisen, dessen Stromabnehmer an eine gemeinsame Stromversorgungsleitung des Schienenfahrzeugs angeschlossen sind, wie es oben beschrieben ist. Erfindungsgemäß, ist vorgesehen, dass zwischen den Stromabnehmer-Wagen mindestens eine mittlere Fahrzeugeinheit mit einer Höchspannungsanlage angeordnet ist, die an einen mittleren Abschnitt der gemeinsamen Stromversorgungsleitung angeschlossen ist; im zuge der gemeinsamen Stromversorgungsleitung sind an einem ersten Ende ihres mittleren Abschnitts ein erster Abschnitts-Hauptschalter in Reihe mit einem ersten Endabschnitt-Hauptschalter und an einem zweiten Ende des mittleren Abschnitts ein zweiter AbschnittsHauptschalter in Reihe mit einem zweiten EndabschnittHauptschalter angeordnet, und der Stromabnehmer des ersten Stromabnehmer-Wagens ist mit dem Verbindungspunkt von erstem Abschnitts-Hauptschalter und erstem Endabschnitt-Häuptschalter und der Stromabnehmers des zweiten Stromabnehmer-Wagens mit dem Verbindungspunkt von zweitem Abschnitts-Hauptschalter und zweitem Endabschnitt-Hauptschalter verbunden.

Ein wesentlicher Vorteil des erfindungsgemäßen Schienenfahrzeugs besteht darin, dass mit ihm die Sicherheitsanforderungen bei einer Störung in seinem elektrischen System zuverlässig erfüllt werden, obwohl das Schienenfahrzeug einen beliebigen, also von einem symmetrischen Aufbau abweichenden Aufbau aufweist. Dabei ist der Aufwand im Vergleich zu dem oben beschriebenen bekannten Schienenfahrzeug nur unwesentlich insofern erhöht, als von der Auswahl der notwendigen Schalter her lediglich die beiden Trennschalter des bekannten Schienenfahrzeugs durch zwei Hauptschalter zu ersetzen sind, und die Hauptschalter in der erfindungsgemäßen Weise anders anzuordnen sind.

Bei einer bevorzugten Ausführungsform des erfindungsgemäßen Schienenfahrzeugs enthält die Hochspannungsanlage der mittleren Fahrzeug-Einheit eine Antriebseinrichtung.

Ferner wird es als vorteilhaft angesehen, wenn die Fahrzeug-Einheiten und die Antriebseinrichtung der mittleren Fahrzeug-Einheit jeweils mindestens 50% der gesamten Antriebsleistung des Schienenfahrzeugs aufweisen.

Um den Sicherheitsanforderungen besonders gut zu genügen, ist gemäß einer vorteilhaften Weiterbildung des erfindungsgemäßen Schienenfahrzeugs jedem Endabschnitt-Hauptschalter eine Stromerfassungseinrichtung und jedem Abschnitts-Hauptschalter eine weitere Stromerfassungseinrichtung zugeordnet und im Zuge der Stromabnehmer ist jeweils eine zusätzliche Stromerfassungseinrichtung angeordnet. Selbstverständlich sind den Stromerfassungseinrichtungen jeweils spezielle Schutzeinrichtungen nachgeordnet, die im Hinblick auf die gemessenen Ströme ansprechen und je nach Lage des Fehlers in den Fahrzeug-Antriebseinheiten oder in der mittleren Fahrzeugeinheit die entsprechenden Hauptschalter betätigen.

Bei dem erfindungsgemäßen Schienenfahrzeug können unterschiedlich ausgebildete Stromabnehmer verwendet werden; als vorteilhaft wird es aber angesehen, wenn die Stromabnehmer Pantographen sind.

Die Erfindung betrifft ferner ein Verfahren zum Betreiben eines elektrischen Schienenfahrzeugs, das so ausgebildet ist, wie es bei dem erfindungsgemäßen Schienenfahrzeug der Fall ist.

Zur Lösung der Aufgabe, die Belastungen des Energieversorgungsnetzes für das erfindungsgemäße Schienenfahrzeug durch Einschaltströme in seinen Transformatoren auf ein netzverträgliches Maß zu begrenzen, werden erfindungsgemäß nach dem Aktivieren des Stromabnehmers des ersten Stromabnehmer-Wagens zunächst der erste Endabschnitt-Hauptschalter und der erste Abschnitts-Hauptschalter und danach der zweite Endabschnitt-Hauptschalter und der zweite Abschnitts-Hauptschalter eingeschaltet.

Der Vorteil dieses Verfahrens besteht darin, dass sich durch serielles Betätigen der Hauptschalter der Fahrzeug-Antriebseinheiten und der mittleren Fahrzeugeinheit die sogenannten Rush-Ströme der Transformatoren zeitlich verteilen lassen, wodurch das Energieversorgungsnetz durch das elektrische Schienenfahrzeug relativ wenig belastet wird.

Bei dem erfindungsgemäßen Verfahren werden die verschiedenen Hauptschalter in unterschiedlicher Weise in Abhängigkeit von der betroffenen Fahrzeug-Antriebseinheit bzw. der mittleren Fahrzeugeinheit betätigt. So ist es vorteilhaft, dass bei einer Störung in der ersten Fahrzeug-Antriebseinheit mit aktiviertem Stromabnehmer und/oder in der Verbindung von dieser Fahrzeug-Antriebseinheit bis zum ersten Endabschnitt-Hauptschalter ausschließlich dieser erste Endabschnitt-Hauptschalter geöffnet wird. Auf diese Weise ist erreicht, dass die nicht von einer Störung betroffene zweite Fahrzeug-Antriebseinheit weiterhin aktiviert bleibt; Entsprechendes gilt für die mittlere Fahrzeugeinheit.

Bei einer Störung in der zweiten Fahrzeug-Antriebseinheit mit inaktivem Stromabnehmer und/oder in der Verbindung von dieser Fahrzeug-Antriebseinheit zu dem zweiten Endabschnitt-Hauptschalter wird ausschließlich der zweite Endabschnitt-Hauptschalter geöffnet. Auch hier ist erreicht, dass eine Fahrzeug-Antriebseinheit und auch die mittlere Fahrzeugeinheit voll aktiv bleiben und somit das Schienenfahrzeug sicher weiterbewegt werden kann.

Entsprechendes gilt bei einer Störung in der mittleren Fahrzeugeinheit und/oder auf dem mittleren Abschnitt der gemeinsamen Stromversorgungsleitung, weil in diesem Falle beide Abschnitts-Hauptschalter geöffnet und beide Stromabnehmer aktiviert werden. So bleiben nämlich beide Fahrzeug-Antriebseinheiten aktiviert und die Sicherheitsanforderungen sind auch in diesem Störungsfalle voll erfüllt.

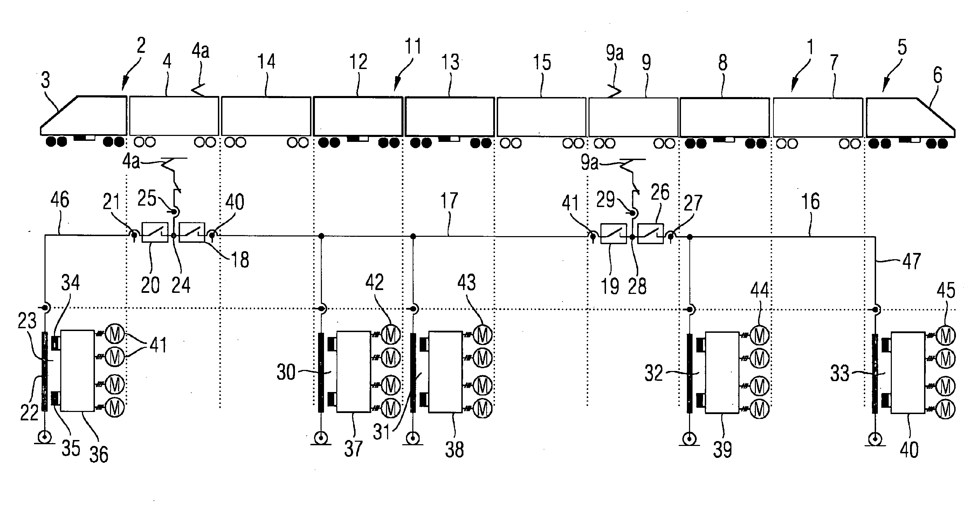

Zur weiteren Erläuterung der Erfindung ist in der Figur schematisch ein Ausführungsbeispiel des erfindungsgemäßen elektrischen Schienenfahrzeugs dargestellt.

Wie die Figur zeigt, weist das dargestellte Schienenfahrzeug 1 eine erste Fahrzeug-Antriebseinheit 2 auf, die aus einem ersten Endtriebwagen 3 und einem Mittelwagen 4 besteht; der Mittelwagen 4 trägt einen Stromabnehmer 4a und wird deshalb nachfolgend auch als erster Stromabnehmer-Wagen 4 bezeichnet. Ferner ist das Schienenfahrzeug 1 mit einer zweiten Fahrzeug-Antriebseinheit 5 versehen, die einen zweiten Endtriebwagen 6 aufweist; mit dem zweiten Endtriebwagen 6 ist ein weiterer Mittelwagen 7 verbunden, auf den ein mittlerer Triebwagen 8 folgt. An diesen Triebwagen 8 ist ein weiterer mittlerer Wagen 9 angehängt, der einen Stromabnehmer 9a aufweist und daher nachfolgend als Stromabnehmer-Wagen 9 bezeichnet wird.

Zwischen den Stromabnehmer-Wagen 4 und 9 ist eine mittlere Fahrzeugeinheit 11 angeordnet, die in dem dargestellten Ausführungsbeispiel zwei Antriebswagen 12 und 13 sowie ergänztende Wagen 14 und 15 enthält.

Das Schienenfahrzeug 1 weist eine gemeinsame Stromversorgungsleitung 16 auf, die einen mittleren Abschnitt 17 besitzt. Dieser mittlere Abschnitt 17 ist durch einen ersten Abschnitts-Hauptschalter 18 und einem zweiten Abschnitts-hauptschalter 19 begrenzt. In Reihe mit dem ersten Abschnittshauptschalter 18 liegt ein erster Endabschnitt-Hauptschalter 20, der über eine Stromerfassungseinrichtung 21 an eine Primärwicklung 22 eines Transformators 23 angeschlossen ist. An einen gemeinsamen Verbindungspunkt 24 des ersten Abschnitts-Hauptschalters 18 und des ersten Endabschnitt-Hauptschalters 20 ist über eine erste zusätzliche Stromerfassungseinrichtung 25 der Stromabnehmer 4a der ersten Fahrzeug-Antriebseinheit 2 angeschlossen.

Am anderen Ende des mittleren Abschnitts 17 der gemeinsamen Stromversorgungsleitung 16 ist in Reihe mit dem zweiten Abschnitts-Hauptschalter 19 ein zweiter Endabschnitt-Hauptschalter 26 vorgesehen, mit dem in Reihe eine weitere Stromerfassungseinrichtung 27 angeordnet ist. Der gemeinsame Verbindungspunkt 28 des zweiten Abschnitts-Hauptschalters 19 und des zweiten Endabschnitt-Hauptschalters 26 ist über eine zweite zusätzliche Stromerfassungseinrichtung 29 mit dem Stromabnehmer 9a der zweiten Fahrzeug-Antriebseinheit 5 verbunden.

Wie die Figur ferner zeigt, sind an die gemeinsame Stromversorgungsleitung 16 nicht nur der Transformator 23, sondern auch weitere Transformatoren 30, 31, 32 und 33 angeschlossen, die jeweils den Triebwagen 3, 12, 13, 8 und 6 zugeordnet sind. Jeder der genannten Transformatoren ist mit jeweils zwei Sekundärwicklungen 34 und 35 versehen, die über gleichartig ausgebildete Wechselrichter/Gleichrichter-Anordnungen 36, 37, 38, 39 und 40 mit Motoren 41 bis 45 für die Achsen der jeweiligen Treibwagen verbunden sind.

Tritt beispielsweise bei aktiviertem Stromabnehmer 4a ein Kurzschluss im Transformator 23 oder auf der Zuleitung 46 zu dem ersten Endabschnitt-Hauptschalter 20 auf, dann geht mit diesem eine Erhöhung des von der einen Stromerfassungseinrichtung 21 erfassten Stromes aus, wodurch hier der besseren Übersichtlichkeit halber nicht dargestellte Schutzeinrichtungen ansprechen und den ersten Endabschnitt-Hauptschalter 20 öffnen. Alle anderen Hauptschalter 18, 19 und 26 bleiben geschlossen, so dass die Versorgung der Motoren der Triebwagen 12, 13, 8 und 6 sichergestellt ist und das Schienenfahrzeug weiterfahren kann mit einer Leistung, die oberhalb von 50 % der im Störungsfalle vorgeschriebenen Mindestleistung ist.

Tritt bei ebenfalls aktiviertem Stromabnehmer 4a ein Kurzschluss in den Transformatoren 32 oder 33 bzw. auf der Zuleitung 47 dieser Transformatoren bis zum zweiten Endabschnitt-Hauptschalter 26 auf, dann wird wegen des von der weiteren Stromerfassungseinrichtung 27 weiter gemeldeten erhöhten Stromes dieser Endabschnitt-Hauptschalter 26 geöffnet; die Abschnitts-Hauptschalter 18 und 19 bleiben geschlossen, so dass bei gestörter zweiter Fahrzeug-Antriebseinheit 5 die Antriebe der ersten Fahrzeug-Antriebseinheit 2 sowie der mittleren Fahrzeugeinheit 11 voll funktionsfähig bleiben.

Stellt sich bei aktiviertem Stromabnehmer 4a eine Störung auf dem mittleren Abschnitt 17 der gemeinsamen Stromversorgungsleitung 16 oder in den Transformatoren 30 und 31 ein, dann meldet die Stromerfassungseinrichtung 40 einen erhöhten Strom, wodurch die hier ebenfalls nicht gezeigten Schutzeinrichtungen ansprechen und der erste Abschnitts-Hauptschalter 18 öffnet. Danach wird auf einen besonderen Befehl hin der zweite Abschnitts-Hauptschalter 19 geöffnet, und es wird zusätzlich der Stromabnehmer 9 angehoben, so dass die beiden Fahrzeug-Antriebseinheiten 2 und 5 weiter aktiv sind; das elektrische Schienen-Fahrzeug lässt sich auch in diesem Störungsfall mit ausreichender Leistung weiter bewegen.

Entsprechend sind die Abläufe, wenn der weitere Stromabnehmer 9a als einziger Stromabnehmer zunächst aktiviert ist.

## Patentansprüche

1. Elektrisches Schienenfahrzeug (1) mit einer ersten und einer zweiten Fahrzeug-Antriebseinheit (2, 5), die an ihren einander zugewandten Enden einen ersten und einen zweiten Stromabnehmer-Wagen (4, 9) aufweisen, dessen Stromabnehmer (4a, 9a) an eine gemeinsame Stromversorgungsleitung (16) des Schienenfahrzeugs (1) angeschlossen sind, wobei zwischen den Stromabnehmer-Wagen (4, 9) mindestens eine mittlere Fahrzeugeinheit (11) mit einer Hochspannungsanlage angeordnet ist, die an einen mittleren Abschnitt (17) der gemeinsamen Stromversorgungsleitung angeschlossen ist,
**dadurch gekennzeichnet, dass**
• im Zuge der gemeinsamen Stromversorgungsleitung (16) an einem ersten Ende ihres mittleren Abschnitts (17) ein erster Abschnitts-Hauptschalter (18) in Reihe mit einem ersten Endabschnitt-Hauptschalter (20) und an einem zweiten Ende des mittleren Abschnitts (17) ein zweiter Abschnitts-Hauptschalter (19) in Reihe mit einem zweiten Endabschnitt-Hauptschalter (26) angeordnet sind und
• der Stromabnehmer (4a) des ersten Stromabnehmer-Wagens (4) mit dem Verbindungspunkt (24) von erstem Abschnitts-Hauptschalter (18) und erstem Endabschnitt-Hauptschalter (20) und der Stromabnehmer (9a) des zweiten Stromabnehmer-Wagens (9) mit dem Verbindungspunkt (28) von zweitem Abschnitts-Hauptsehalter (19) und zweitem Endabschnitt-Hauptschalter (26) verbunden ist.

2. Schienenfahrzeug nach Anspruch 1, **dadurch gekennzeichnet, dass**
• die Hochspannungsanlage der mittleren Fahrzeug-Einheit eine Antriebseinrichtung enthält.

3. Schienenfahrzeug nach Anspruch 2, **dadurch gekennzeichnet, dass**
• die Fahrzeug-Antriebseinheiten und die Antriebseinrichtung der mittleren Fahrzeug-Einheit jeweils höchstens 50% der gesamten Antriebsleistung des Schienenfahrzeugs aufweisen.

4. Schienenfahrzeug nach einem der vorangehenden Ansprüche, **dadurch gekennzeichnet, dass**
• jedem Endabschnitt-Hauptschalter (20, 26) eine Stromerfassungseinrichtung (21, 27) und jedem Abschnitts-Hauptschalter (18, 19) eine weitere Stromerfassungseinrichtung (40, 41) zugeordnet ist und
• im Zuge der Stromabnehmer (4a, 9a) jeweils eine zusätzliche Stromerfassungseinrichtung (25, 29) angeordnet ist.

5. Schienenfahrzeug nach einem der vorangehenden Ansprüche, **dadurch gekennzeichnet, dass**
• die Stromabnehmer (4a, 9a) Pantographen sind.

6. Verfahren zum Betreiben eines elektrischen Schienenfahrzeugs (1) nach einem der vorangehenden Ansprüche, **dadurch gekennzeichnet, dass**
• nach dem Aktivieren des Stromabnehmers (4a) des ersten Stromabnehmer-Wagens (4) zunächst der erste Endabschnitt-Hauptschalter (20) und der erste Abschnitts-Hauptschalter (18) und danach der zweite Endabschnitt-Hauptschalter (26) und der zweite Abschnitts-Hauptschalter (19) eingeschaltet werden.

7. Verfahren zum Betreiben eines elektrischen Schienenfahrzeugs (1) nach einem der Ansprüche 1 bis 5 oder Verfahren nach Anspruch 6, **dadurch gekennzeichnet, dass**
• bei einer Störung in der ersten Fahrzeug-Antriebseinheit (2) mit aktiviertem ersten Stromabnehmer (4a) und/oder in der Zuleitung (46) von dieser Fahrzeug-Antriebseinheit (2) bis zum ersten Endabschnitt-Hauptschalter (20) ausschließlich dieser erste Endabschnitt-Hauptschalter (20) geöffnet wird.

8. Verfahren zum Betreiben eines elektrischen Schienenfahrzeugs (1) nach einem der Ansprüche 1 bis 5 oder Verfahren nach Anspruch 6, **dadurch gekennzeichnet, dass**
• bei einer Störung in der zweiten Fahrzeug-Antriebseinheit (5) mit inaktivem Stromabnehmer und/oder in der Zuleitung (47) von dieser Fahrzeug-Antriebseinheit (5) zu dem zweiten Endabschnitt-Hauptschalter (26)ausschließlich der zweite Endabschnitt-Häuptschalter (26) geöffnet wird.

9. Verfahren zum Betreiben eines elektrischen Schienenfahrzeugs nach einem der Ansprüche 1 bis 5 oder Verfahren nach Anspruch 6, **dadurch gekennzeichnet, dass**
• bei einer Störung in der mittleren Fahrzeugeinheit (11) und/oder auf dem mittleren Abschnitt (17) der gemeinsamen Stromversorgungsleitung (16) beide Abschnitts-Hauptschalter (18, 19) geöffnet und beide Stromabnehmer (4a, 9a) aktiviert werden.

## Claims

1. Electric rail vehicle (1) having a first and a second vehicle drive unit (2, 5) which have, at their ends which face one another, a first and a second current collector trolley (4, 9), the current collectors (4a, 9a) of the said current collector trolleys being connected to a common power supply line (16) of the rail vehicle (1), wherein at least one central vehicle unit (11) with a high-voltage installation which is connected to a central section (17) of the common power supply line is arranged between the current collector trolleys (4, 9),
**characterized in that**
• in the course of the common power supply line (16), a first section main switch (18) is arranged in series with a first end section main switch (20) at a first end of the central section (17) of the said common power supply line, and a second section main switch (19) is arranged in series with a second end section main switch (26) at a second end of the central section (17), and
• the current collector (4a) of the first current collector trolley (4) is connected to the connection point (24) between the first section main switch (18) and the first end section main switch (20), and the current collector (9a) of the second current collector trolley (9) is connected to the connection point (28) between the second section main switch (19) and the second end section main switch (26).

2. Rail vehicle according to Claim 1, **characterized in that**
• the high-voltage installation of the central vehicle unit contains a drive device.

3. Rail vehicle according to Claim 2, **characterized in that**
• the vehicle drive units and the drive device of the central vehicle unit each have at most 50% of the total drive power of the rail vehicle.

4. Rail vehicle according to one of the preceding claims, **characterized in that**
• a current detection device (21, 27) is associated with each end section main switch (20, 26), and a further current detection device (40, 41) is associated with each section main switch (18, 19), and
• in each case one additional current detection device (25, 29) is arranged in the course of the current collectors (4a, 9a).

5. Rail vehicle according to one of the preceding claims, **characterized in that**
• the current collectors (4a, 9a) are pantographs.

6. Method for operating an electric rail vehicle (1) according to one of the preceding claims, **characterized in that**
• after activation of the current collector (4a) of the first current collector trolley (4), the first end section main switch (20) and the first section main switch (18) are initially switched on, and then the second end section main switch (26) and the second section main switch (19) are switched on.

7. Method for operating an electric rail vehicle (1) according to one of Claims 1 to 5 or method according to Claim 6, **characterized in that**
• only the first end section main switch (20) is opened in the event of a fault in the first vehicle drive unit (2) with the first current collector (4a) activated and/or in the supply line (46) from this vehicle drive unit (2) to the said first end section main switch (20).

8. Method for operating an electric rail vehicle (1) according to one of Claims 1 to 5 or method according to Claim 6, **characterized in that**
• only the second end section main switch (26) is opened in the event of a fault in the second vehicle drive unit (5) with the current collector inactive and/or in the supply line (47) from this vehicle drive unit (5) to the second end section main switch (26).

9. Method for operating an electric rail vehicle according to one of Claims 1 to 5 or method according to Claim 6, **characterized in that**
• both section main switches (18, 19) are opened and both current collectors (4a, 9a) are activated in the event of a fault in the central vehicle unit (11) and/or on the central section (17) of the common power supply line (16).

## Revendications

1. Véhicule (1) ferroviaire électrique comprenant un premier et un deuxième groupes (2, 5) de propulsion du véhicule, qui ont à leurs extrémités tournées l'une vers l'autre un premier et un deuxième wagon (4, 9) à prise de courant, dont les prises (4a, 9a) sont raccordées à une ligne (16) commune d'alimentation en courant du véhicule (1) ferroviaire, dans lequel il est disposé entre les wagons (4, 9) à prise au moins une unité (11) médiane de véhicule ayant une installation de haute tension, qui est raccordée à un tronçon (17) médian de la ligne commune d'alimentation en courant,
**caractérisé en ce que**
• il est monté, dans la ligne (16) commune d'alimentation en courant, à une première extrémité de son tronçon (17) médian, un premier interrupteur (18) principal de tronçon en série avec un premier interrupteur (20) de tronçon d'extrémité et à une deuxième extrémité du tronçon (17) médian un deuxième interrupteur (17) principal de tronçon en série avec un deuxième interrupteur (26) principal de tronçon d'extrémité et
• la prise (4a) de courant du premier wagon (4) à prise de courant est reliée au point (24) de liaison du premier interrupteur (18) principal de tronçon et du premier interrupteur (20) principal de tronçon d'extrémité et la prise (9a) de courant du deuxième wagon (9) à prise de courant est reliée au point (28) de liaison du deuxième interrupteur (19) principal de tronçon et du deuxième interrupteur (26) principal de tronçon d'extrémité.

2. Véhicule (1) ferroviaire suivant la revendication 1, **caractérisé en ce que**,
• l'installation de haute tension de l'unité de véhicule médiane comporte un dispositif de propulsion.

3. Véhicule (1) ferroviaire suivant la revendication 1, **caractérisé en ce que**,
• les groupes de propulsion de véhicule et le dispositif de propulsion de l'unité de véhicule médiane ont respectivement au plus 50 % de la puissance de propulsion totale du véhicule ferroviaire.

4. Véhicule (1) ferroviaire suivant l'une des revendications précédentes, **caractérisé en ce que**
• un dispositif (21, 27) de détection du courant est associé à chaque interrupteur (20, 26) principal de tronçon d'extrémité et un autre dispositif (40, 41) de détection du courant est associé à chaque interrupteur (18, 19) principal de tronçon et
• il est monté dans les prises (4a, 9a) de courant respectivement un dispositif (25, 29) supplémentaire de détection du courant.

5. Véhicule (1) ferroviaire suivant l'une des revendications précédentes, **caractérisé en ce que**
• les prises (4a, 9a) de courant sont des pantographes.

6. Procédé pour faire fonctionner un véhicule ferroviaire électrique suivant l'une des revendications précédentes, **caractérisé en ce que**
• après l'activation de la prise (4a) de courant du premier wagon (4a) à prise de courant de courant, on ferme d'abord le premier interrupteur (20) principal de tronçon d'extrémité et le premier interrupteur (18) principal de tronçon et ensuite le deuxième interrupteur (26) principal de tronçon d'extrémité et le deuxième interrupteur (19) principal de tronçon.

7. Procédé pour faire fonctionner un véhicule (1) ferroviaire électrique suivant l'une des revendications 1 à 5 ou procédé suivant la revendication 6, **caractérisé en ce que**
• s'il se produit une panne dans le premier groupe (2) de propulsion de véhicule alors que la première prise (4a) de courant est activée et/ou dans la ligne (46) allant de ce groupe (2) de propulsion de véhicule au premier interrupteur (20) principal de tronçon d'extrémité, on ouvre exclusivement ce premier interrupteur (20) principal de tronçon d'extrémité.

8. Procédé pour faire fonctionner un véhicule (1) ferroviaire électrique suivant l'une des revendications 1 à 5 ou procédé suivant la revendication 6, **caractérisé en ce que**
• s'il se produit une panne dans le deuxième groupe (5) de propulsion de véhicule, alors que la prise de courant est inactive et/ou dans la ligne (47) allant de ce groupe (5) de propulsion de véhicule au deuxième interrupteur (26) principal de tronçon d'extrémité, on ouvre exclusivement le deuxième interrupteur (26) principal de tronçon d'extrémité.

9. Procédé pour faire fonctionner un véhicule ferroviaire électrique suivant l'une des revendications 1 à 5 ou procédé suivant la revendication 6, **caractérisé en ce que**
• s'il se produit une panne dans l'unité (11) de véhicule médiane et/ou sur le tronçon (17) médian de la ligne (16) commune d'alimentation en courant, on ouvre les deux interrupteurs (18, 19) principaux de tronçons et on active les deux prises (4a, 9a) de courant.
